# EUROPÄISCHE PATENTANMELDUNG

(11) **EP 2 369 286 A2**
(43) Veröffentlichungstag der Anmeldung: **28.09.2011**
(21) Anmeldenummer: 11151830.4
(22) Anmeldetag: 24.01.2011
(51) Int. Cl.: F28D 7/10, F02M 25/07, F28F 19/01

(54) **Abgaswärmetauschereinrichtung**

(30) Priorität: 26.03.2010 DE 102010013112
(71) Anmelder: Pierburg GmbH, 41460 Neuss (DE)
(72) Erfinder: Weidmann, Bernd, 41542 Dormagen (DE); Baumeister, Lars, 41334 Nettetal (DE)
(74) Vertreter: Patentanwälte ter Smitten

(57) **Zusammenfassung**

Abgaswärmetauschereinrichtung (1) für eine Brennkraftmaschine mit einem Gehäuse (2) das mindestens einen Abgaskühlkanal (3), mindestens einen Kühlmittelkanal (4) und mindestens einen Bypasskanal (5) aufweist, wobei der Abgaskühlkanal (3) durch das durch den Kühlmittelkanal (4) strömende Kühlfluid kühlbar ist, dadurch gekennzeichnet, dass im Bypasskanal (5) ein hitzebeständiges Schlauchstück (9) vorgesehen ist.

## Beschreibung

Die Erfindung betrifft eine Abgaswärmetauschereinrichtung für eine Brennkraftmaschine mit einem Gehäuse, das mindestens einen Abgaskühlkanal, mindestens einen Kühlmittelkanal und mindestens einen Bypasskanal aufweist, wobei der Abgaskühlkanal durch das durch den Kühlmittelkanal strömende Kühlfluid kühlbar ist.

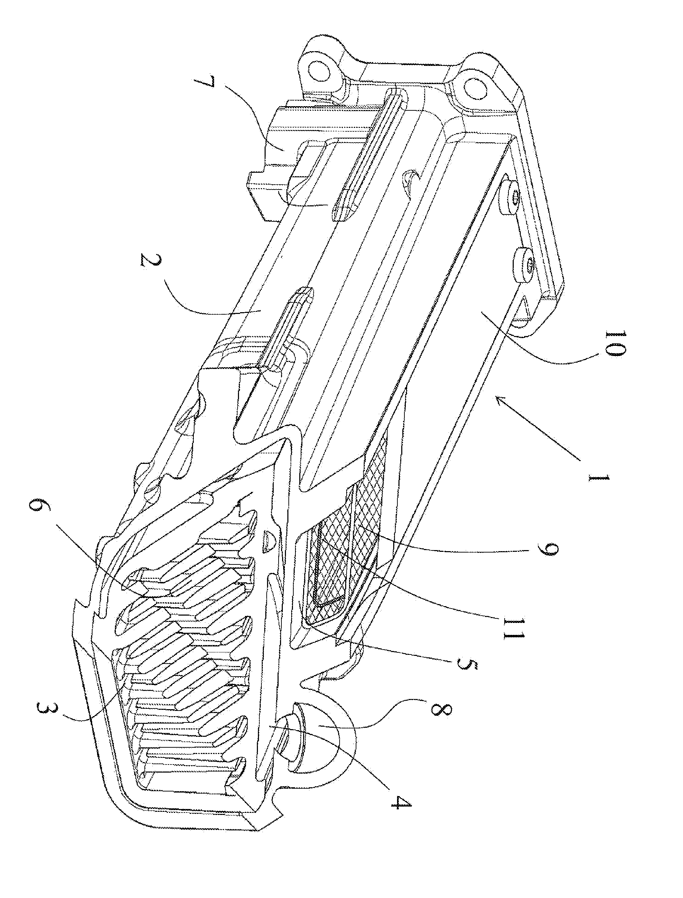

Eine derartige Wärmetauschereinrichtung ist aus der DE 10 2005 040 612 bekannt. Bei einem derartigen Wärmetauscher kann das Abgas seine Wärme in diesem Falle über ein Rohrbündel von Abgasrohren an das Kühlmittel abgeben und diese dann anderen Verbrauchern im Fahrzeugbereich zur Verfügung stellen. Insbesondere beim Startvorgang der Brennkraftmaschine ist es erwünscht, heißes Abgas zum Lufteinlass der Brennkraftmaschine zurückzuführen. Hierzu kann das Abgas einen Bypasskanal durchströmen, der vom gekühlten Bereich der Wärmetauschereinrichtung so gut wie möglich thermisch isoliert sein sollte. Bei einer Integration von Abgaswärmetauscher und Bypasskanal in einer Abgaswärmetauschereinrichtung gestaltet sich diese vollständige thermische Isolierung schwierig. Die DE 10 2005 040 612 A1 offenbart hierzu eine hochtemperaturfeste Kunststoffummantelung des Bypasskanals, wobei nicht nachzuvollziehen ist, wie eine derartige Ummantelung bei herkömmlichen Wärmetauschern, wie in Fig. 1 dieser Schrift beispielsweise dargestellt, hergestellt werden soll.

Es ist daher Aufgabe der vorliegenden Erfindung bei einer Abgaswärmetauschereinrichtung, die einen integrierten Bypasskanal vorsieht, auf einfache und kostengünstige Weise eine bestmögliche thermische Trennung von Bypasskanal/Bypasskanälen und Kühlmittelkanal/Kühlmittelkanälen zu gewährleisten.

Diese Aufgabe wird dadurch gelöst, dass im Bypasskanal ein hitzebeständiges Schlauchstück vorgesehen ist. Hierdurch wird auf einfache montagetechnische Weise und damit kostengünstig eine sehr gute Wärmeisolation des Bypasskanals geschaffen.

Wenn das hitzebeständige Schlauchstück aus einem offenporigen Gewebe besteht, kann es zusätzlich als sogenannte Rußfalle für das Abgas dienen. Rußpartikel können damit durch den Gewebeschlauch aufgefangen und zurückgehalten werden. Vorteilhafterweise kann das Gehäuse ein Deckelelement besitzen, das den Bypasskanal verschließt. Hierdurch wird die Montage noch einmal vereinfacht, dadurch, dass das hitzebeständige Schlauchstück einfach nur in den Bypasskanal gelegt werden muss. Aufgrund der Neigung des Schlauches, in seine ursprüngliche Form zurückzukehren, wird das hitzebeständige Schlauchstück beim Aufsetzen des Deckels zusammengestaucht und festgeklemmt.

Ein einfaches Austauschen des hitzebeständigen Schlauchstückes wird dadurch ermöglicht, dass das Deckelelement lösbar mit dem Gehäuse verbunden ist.

Dadurch, dass das Schlauchstück mindestens ein Anschlussorgan aufweist, ist eine einfache Integration in den Abgaskühlkanal gewährleistet und gegebenenfalls ein vereinfachter Anschluss an eine Ventilvorrichtung möglich.

Ein Ausführungsbeispiel der Erfindung ist in der Zeichnung dargestellt. Hierbei zeigt die einzige Figur eine perspektivische Schnittansicht einer erfindungsgemäßen Wärmetauschereinrichtung.

Eine Wärmetauschereinrichtung 1 ist auf bekannte Weise in einen nicht dargestellten Abgaskanal integriert. Die Wärmetauschereinrichtung 1 weist ein Gehäuse 2 auf, das einen Abgaskühlkanal 3, einen Kühlmittelkanal 4 und einen Bypasskanal 5 aufweist. Dabei findet ein Wärmeaustausch zwischen dem heißen Abgas im Abgaskühlkanal 3 und dem im Kühlmittelkanal 4 befindlichen Kühlmittel auf bekannte Weise durch die dargestellten Rippen 6 statt. Mit den Bezugszeichen 7 und 8 ist im vorliegenden Ausführungsbeispiel der Kühlmitteleinlass und der Kühlmittelauslass bezeichnet.

Insbesondere in der Startphase der Brennkraftmaschine ist es gewünscht, Abgas mit einer hohen Temperatur zum Einlassbereich der Brennkraftmaschine zurückzuführen, um die Brennkraftmaschine möglichst schnell zu erwärmen und somit die Abgasgrenzwerte möglichst gering zu halten. Um dies zu gewährleisten, steuert ein bekanntes, nicht weiter dargestelltes Ventil den Abgasfluss derart, dass das Abgas durch den Bypasskanal 5 ohne Wärmeaustausch geführt wird. Um den Bypasskanal 5 auf möglichst einfache Weise thermisch vom Kühlbereich der Wärmetauschereinrichtung 1 zu trennen, ist im vorliegenden Ausführungsbeispiel ein hitzebeständiges Schlauchstück 9 vorgesehen. Dieses hitzebeständige Schlauchstück 9 ist auf einfache Weise bei abgenommenem Deckel 10 der Abgaswärmetauschereinrichtung 1 in den Bypasskanal 5 einzulegen und wird dadurch fixiert, dass es durch den montierten Deckel 10 im Bypasskanal verklemmt wird. Ist der Deckel 10 lösbar mit dem Gehäuse verbunden, kann das hitzebeständige Schlauchstück 9 bei Bedarf ersetzt werden.

Da das vorliegende hitzebeständige Schlauchstück 9 aus einem offenporigen Gewebe hergestellt ist, dient es zudem als Rußfalle für das rückzuführende Abgas. Hierdurch kann einem Verkleben eines nicht dargestellten Abgasrückführventils, das die Rückführung des Abgases in den Frischluftstrom regelt, wirksam verhindert werden. Anschlussstücke 11 können die Integration der Abgaswärmetauschereinrichtung in den Abgaskühlkanal 3 oder den Anschluss an ein bekanntes Bypassventil vereinfachen.

## Patentansprüche

1. Abgaswärmetauschereinrichtung für eine Brennkraftmaschine mit einem Gehäuse das mindestens einen Abgaskühlkanal, mindestens einen Kühlmittelkanal und mindestens einen Bypasskanal aufweist, wobei der Abgaskühlkanal durch das durch den Kühlmittelkanal strömende Kühlfluid kühlbar ist, **dadurch gekennzeichnet, dass** im Bypasskanal (5) ein hitzebeständiges Schlauchstück (9) vorgesehen ist.

2. Abgaswärmetauschereinrichtung nach Anspruch 1, **dadurch gekennzeichnet, dass** das hitzebeständige Schlauchstück (9) aus einem offenporigen Gewebe besteht.

3. Abgaswärmetauschereinrichtung nach Anspruch 1 oder 2, **dadurch gekennzeichnet, dass** das Gehäuse ein Deckelelement (10) besitzt, das den Bypasskanal (5) verschließt.

4. Abgaswärmetauschereinrichtung nach Anspruch 3, **dadurch gekennzeichnet, dass** das Deckelelement (10) lösbar mit dem Gehäuse (2) verbunden ist.

5. Abgaswärmetauschereinrichtung nach einem der vorhergehenden Ansprüche, **dadurch gekennzeichnet, dass** das Schlauchstück (9) mindestens ein Anschlussorgan (11) aufweist.
